# EUROPEAN PATENT APPLICATION

(11) **EP 4 422 192 A1**
(43) Date of publication of application: **28.08.2024**
(21) Application number: 22883218.4
(22) Date of filing: 31.08.2022
(51) Int. Cl.: H04N 23/60, G06N 3/08, G06N 20/00

(54) **INFORMATION PROCESSING DEVICE, INFORMATION PROCESSING METHOD, AND PROGRAM**

(30) Priority: 22.10.2021 JP 2021172865
(71) Applicant: Sony Semiconductor Solutions Corporation, Atsugi-shi, Kanagawa 243-0014 (JP)
(72) Inventor: TAJIMA, Masanori, Atsugi-shi, Kanagawa 243-0014 (JP); NOMURA, Yoshikuni, Atsugi-shi, Kanagawa 243-0014 (JP); MORIYAMA, Yutaka, Atsugi-shi, Kanagawa 243-0014 (JP); HOSAKA, Hajime, Atsugi-shi, Kanagawa 243-0014 (JP); HATA, Ryuhei, Atsugi-shi, Kanagawa 243-0014 (JP); ANDO, Yoshiki, Atsugi-shi, Kanagawa 243-0014 (JP)
(74) Representative: MFG Patentanwälte Meyer-Wildhagen Meggle-Freund Gerhard PartG mbB
(86) International application number: PCT/JP2022/032746
(87) International publication number: WO 2023/067906

(57) **Abstract**

It is desirable that a technique that allows a reduction in cost of collecting training data required for generating an inference model be provided.

Provided is an information processing device including: a training data generation unit configured to generate second training data on the basis of the fact that detection information related to detection of a predetermined event does not satisfy a first condition, the detection information being obtained on the basis of a first inference model generated through training based on first training data and sensor data detected by a sensor; and a retraining unit configured to perform retraining on the basis of the second training data to obtain a second inference model.

## Description

### TECHNICAL FIELD

The present disclosure relates to an information processing device, an information processing method, and a program.

### BACKGROUND ART

A technique of detecting a predetermined event on the basis of data obtained by a sensor and a pretrained inference model has become known recently. In such a technology, a suitable inference model may differ in a manner that depends on an environment where the sensor is provided or the like. Disclosed, therefore, is a technique by which information regarding the environment where the sensor is provided or the like is transmitted from the sensor to a server, the server selects an inference model corresponding to such information, and returns the selected inference model to the sensor (see, for example, Patent Document 1).

### CITATION LIST

### PATENT DOCUMENT

Patent Document 1: Japanese Patent Application Laid-Open No. 2020-161167

### SUMMARY OF THE INVENTION

### PROBLEMS TO BE SOLVED BY THE INVENTION

It is, however, desirable that a technique that allows a reduction in cost of collecting training data required for generating an inference model be provided.

### SOLUTIONS TO PROBLEMS

According to an aspect of the present disclosure, provided is an information processing device including: a training data generation unit configured to generate second training data on the basis of a fact that detection information related to detection of a predetermined event does not satisfy a first condition, the detection information being obtained on the basis of a first inference model generated through training based on first training data and sensor data detected by a sensor; and a retraining unit configured to perform retraining on the basis of the second training data to obtain a second inference model.

Furthermore, according to another aspect of the present disclosure, provided is an information processing method including: generating second training data on the basis of a fact that detection information related to detection of a predetermined event does not satisfy a first condition, the detection information being obtained on the basis of a first inference model generated through training based on first training data and sensor data detected by a sensor; and obtaining a second inference model by causing a processor to perform retraining on the basis of the second training data.

Furthermore, according to another aspect of the present disclosure, provided is a program causing a computer to function as an information processing device, the information processing device including: a training data generation unit configured to generate second training data on the basis of a fact that detection information related to detection of a predetermined event does not satisfy a first condition, the detection information being obtained on the basis of a first inference model generated through training based on first training data and sensor data detected by a sensor; and a retraining unit configured to perform retraining on the basis of the second training data to obtain a second inference model.

### BRIEF DESCRIPTION OF DRAWINGS

Fig. 1 is a diagram for describing a configuration example of an information processing system according to a comparative example.
Fig. 2 is a diagram for describing a configuration example of an information processing system according to an embodiment of the present disclosure.
Fig. 3 is a flowchart illustrating an example of how the information processing system according to the embodiment of the present disclosure operates.
Fig. 4 is a diagram for describing a first example of processing performed by the information processing system according to the embodiment of the present disclosure.
Fig. 5 is a diagram for describing a second example of processing performed by the information processing system according to the embodiment of the present disclosure.
Fig. 6 is a diagram for describing a third example of processing performed by the information processing system according to the embodiment of the present disclosure.
Fig. 7 is a diagram for describing a fourth example of processing performed by the information processing system according to the embodiment of the present disclosure.
Fig. 8 is a block diagram illustrating a hardware configuration example of an information processing device.

### MODE FOR CARRYING OUT THE INVENTION

Hereinafter, a preferred embodiment of the present disclosure will be described in detail with reference to the accompanying drawings. Note that, in the present specification and the drawings, components having substantially the same functional configurations are denoted by the same reference signs, and redundant descriptions are omitted.

Furthermore, in the present specification and the drawings, a plurality of components having substantially the same or similar functional configurations may be distinguished by attaching different numbers after the same reference signs. However, in a case where it is not particularly necessary to distinguish the plurality of components having substantially the same or similar functional configurations, only the same reference signs are attached. Furthermore, similar components of different embodiments may be distinguished by attaching different alphabets after the same reference signs. However, in a case where it is not particularly necessary to distinguish the similar components, only the same reference signs are attached.

Note that the description will be given in the following order.
0. Outline
1. Details of embodiment
   1.1. System configuration example
   1.2. Operation example
   1.3. Functional details
2. Hardware configuration example
3. Conclusion

### <0. Outline>

First, an outline of an embodiment of the present disclosure will be described. A technique of detecting a predetermined event on the basis of data obtained by a sensor and a pretrained inference model has become known recently. In such a technique, it is common for a worker to manually collect training data required for generating an inference model. Furthermore, it is common for the worker to manually label the training data with ground-truth labels. Such a general technique will be described as a comparative example.

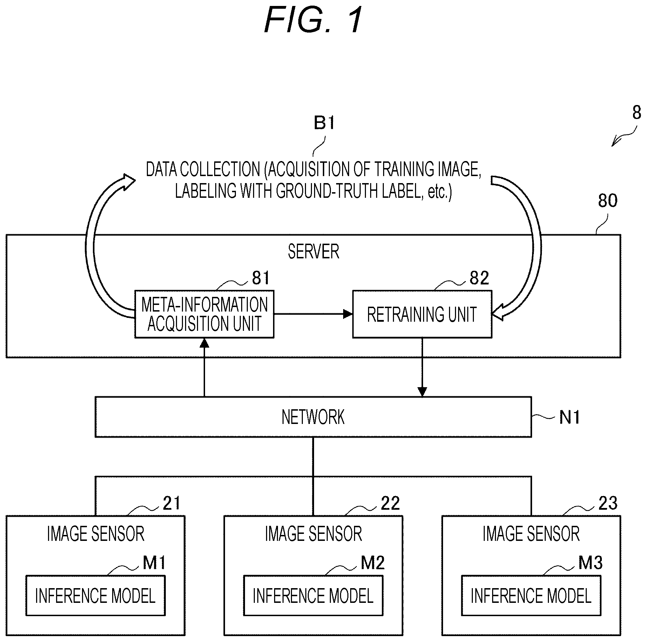

Fig. 1 is a diagram for describing a configuration example of an information processing system according to the comparative example. As illustrated in Fig. 1, an information processing system 8 according to the comparative example includes a server 80, a network N1, and an image sensors 21 to 23.

The image sensors 21 to 23 are capable of communicating with the server 80 over the network N1. Furthermore, an inference model M1 is stored in a memory mounted on the image sensor 21, an inference model M2 is stored in a memory mounted on the image sensor 22, and an inference model M3 is stored in a memory mounted on the image sensor 23. The server 80 includes a meta-information acquisition unit 81 and a retraining unit 82.

The meta-information acquisition unit 81 acquires meta information of each of the image sensors 21 to 23. For example, the meta information may include environment information related to an environment where each of the image sensors 21 to 23 is present.

In the comparative example, the worker performs data collection B1 including acquisition of training images generated in accordance with the meta information acquired by the meta-information acquisition unit 81 and labeling of the training images with ground-truth labels. The retraining unit 82 performs retraining on the basis of the training images and the ground-truth labels. This allows an inference model to be generated in accordance with the environment where each of the image sensors 21 to 23 is present or the like.

There is, however, a circumstance where the cost of the data collection including the acquisition of the training images and the labeling with the ground-truth labels performed by the worker tends to increase. In particular, in order to collect actually captured images as the training images, it is necessary to attach the training images and the ground-truth labels while changing the environment where the sensor is present, so that the cost of data collection can be enormous.

The present specification, therefore, mainly proposes a technique that allows a reduction in cost of collecting training data required for generating an inference model.

The above is the outline of the embodiment of the present disclosure.

### <1. Details of embodiment>

Next, the embodiment of the present disclosure will be described in detail.

### (1.1. System configuration example)

First, a configuration example of an information processing system according to the embodiment of the present disclosure will be described.

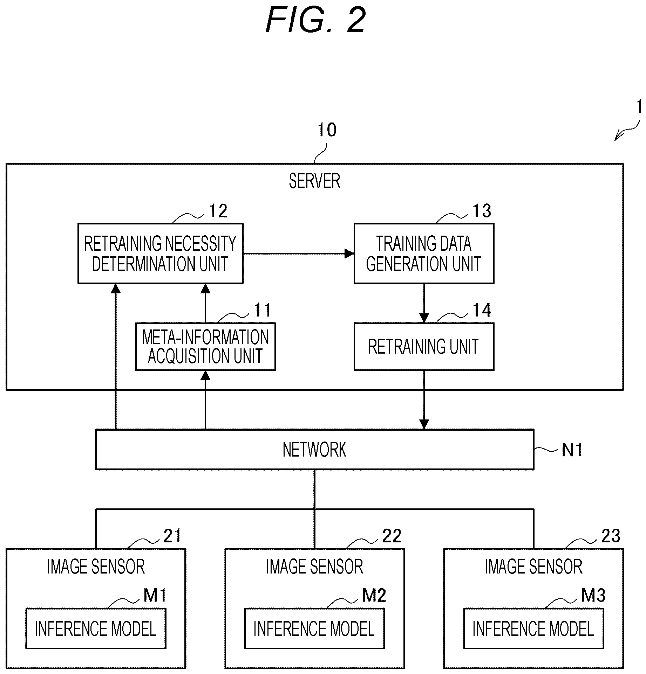

Fig. 2 is a diagram for describing the configuration example of the information processing system according to the embodiment of the present disclosure. As illustrated in Fig. 2, an information processing system 1 according to the embodiment of the present disclosure includes a server 10, a network N1, and image sensors 21 to 23. The server 10 can be implemented by a computer. The server 10 is connected to the network N1 and can communicate with each of the image sensors 21 to 23 over the network N1.

### (Image sensors 21 to 23)

The image sensors 21 to 23 are provided at different places. Note that, in the embodiment of the present disclosure, a case where the information processing system 1 includes three image sensors as described above is mainly assumed. The type of the sensors included in the information processing system 1, however, is not limited to an image sensor as described later. Furthermore, the number of image sensors is not limited to three, and is only required to be at least two.

Each of the image sensors 21 to 23 performs sensing to obtain sensor data. More specifically, each of the image sensors 21 to 23 detects an image as an example of the sensor data by capturing an image of the surroundings. An artificial intelligence (AI) chip for enabling an AI processing function is mounted on each of the image sensors 21 to 23. More specifically, the AI chip includes an arithmetic device, a memory, and the like. An inference model M1 is stored in a memory mounted on the image sensor 21, an inference model M2 is stored in a memory mounted on the image sensor 22, and an inference model M3 is stored in a memory mounted on the image sensor 23.

Each of the inference models M1 to M3 is a pretrained model generated in advance through training based on the training images (first training data). Here, a machine learning algorithm used in training may be typically a neural network (for example, deep learning), but the machine learning algorithm used in training is not limited to such an example. For example, the machine learning algorithm used in training may be a support vector machine (SVM) or the like, or may be another machine learning algorithm.

Note that the inference models M1 to M3 may be different from each other, or at least any two of the inference models M1 to M3 may be the same model.

The arithmetic device mounted on the image sensor 21 inputs a captured image into the inference model M1 to obtain, as an inference result, an output from the inference model M1 in response to the input of the image into the inference model M1.

In the embodiment of the present invention, a case where the arithmetic device mounted on the image sensor 21 obtains, as the inference result, the number of times of detection of whether or not a predetermined event appears in the images (hereinafter, also referred to as "detection times"), and the number of times of determination that the predetermined event appears in the images (hereinafter, also referred to as "event determination times") among the detection times is mainly assumed. The inference result output from the inference model M1, however, is not limited to such an example.

Furthermore, examples of the predetermined event include a suspicious person appearing in the images. The predetermined event, however, is not limited to such an example. For example, the predetermined event may be an object other than the suspicious person appearing in the images, or may be an abnormal state appearing in the images (for example, a state where a fire is occurring or the like).

The arithmetic device mounted on the image sensor 21 obtains detection information related to the detection of the predetermined event. Here, a case where the arithmetic device mounted on the image sensor 21 calculates a detection rate related to the detection of the predetermined event as an example of the detection information is mainly assumed. In particular, a case where a ratio of the number of times of detection of whether or not the predetermined event appears to the number of images (that is, the number of frames) subjected to inference is calculated as the detection rate related to the detection of the predetermined event is mainly assumed. The detection information obtained by the arithmetic device mounted on the image sensor 21, however, is not limited to the detection rate related to the detection of the predetermined event.

Note that, in a manner similar to the arithmetic device mounted on the image sensor 21, the arithmetic device mounted on the image sensor 22 also inputs a captured image into the inference model M2 to obtain, as an inference result, an output from the inference model M2 in response to the input of the image into the inference model M2, and calculates a detection rate as an example of the detection information. Moreover, in a manner similar to the arithmetic device mounted on the image sensor 21, the arithmetic device mounted on the image sensor 23 also inputs a captured image into the inference model M3 to obtain, as an inference result, an output from the inference model M3 in response to the input of the image into the inference model M3, and calculates a detection rate as an example of the detection information.

Moreover, the image sensor 21 has a clocking function, and obtains a current time using the clocking function. Moreover, the image sensor 21 includes a temperature sensor, and obtains an environmental temperature by measuring a temperature of the environment where the image sensor 21 is present using the temperature sensor. Moreover, the image sensor 21 obtains various camera parameters. Note that the camera parameters may include a gain setting, an aperture value, a focal length, a sensor identification number, and the like.

Note that, in a manner similar to the image sensor 21, the image sensor 22 also obtains the current time, the environmental temperature, and various camera parameters. Moreover, in a manner similar to the image sensor 21, the image sensor 23 also obtains the current time, the environmental temperature, and various camera parameters.

The image sensor 21 transmits meta information including the inference result, the detection rate related to the detection of the predetermined event, the current time, the environmental temperature, and the camera parameters, and the captured image to the server 10 over the network N1. In a manner similar to the image sensor 21, the image sensor 22 and the image sensor 23 also transmit the meta information and the image to the server 10 over the network N1.

### (Server 10)

As illustrated in Fig. 2, the server 10 is implemented by a computer, and includes a meta-information acquisition unit 11, a retraining necessity determination unit 12, a training data generation unit 13, and a retraining unit 14. Note that the server 10 performs similar processing on the image sensors 21 to 23, so that the processing performed on the image sensor 21 will be mainly described below, and no description will be given of details of the processing performed on the image sensor 22 and the image sensor 23.

The meta-information acquisition unit 11, the retraining necessity determination unit 12, the training data generation unit 13, and the retraining unit 14 are included in a control unit (not illustrated). For example, the control unit (not illustrated) may include one or a plurality of central processing units (CPUs) or the like. In a case where the control unit (not illustrated) includes a processor such as a CPU, the processor may include an electronic circuit. The control unit (not illustrated) can be implemented by a program executed by such a processor.

### (Meta-information acquisition unit 11)

The meta-information acquisition unit 11 acquires the meta information and the image from image sensor 21 over the network N1. Moreover, the meta-information acquisition unit 11 generates other meta information on the basis of the image acquired from image sensor 21. The other meta information may include brightness (lightness) of the image, a difference in position of a light source, a difference in position of a subject, noise characteristics (white point, random noise), dirt on a lens, a misalignment of the lens, a label attached to an object (subject), a posture of the object (subject), and the like. Similarly, the meta-information acquisition unit 11 generates the other meta information on the basis of the image acquired from each of the image sensors 22 and 23.

### (Retraining necessity determination unit 12)

The retraining necessity determination unit 12 determines whether or not the detection rate included in the meta information acquired from the image sensor 21 over the network N1 satisfies a first condition. Here, a case where the first condition includes a condition that the detection rate related to the detection of the predetermined event is within an expected range (first range) is mainly assumed.

Moreover, in a case where the detection rate related to the detection of the predetermined event does not satisfy the first condition, the retraining necessity determination unit 12 may determine whether or not the environment information related to the environment where the image sensor 21 is present satisfies a second condition. For example, the environment information may include brightness of the environment where the image sensor 21 is present. At this time, the second condition may include a condition that the brightness of the environment is within a second range. The brightness of the environment can be determined from the current time or the brightness of the image included in the meta information.

Alternatively, in a case where the detection rate related to the detection of the predetermined event does not satisfy the first condition, the retraining necessity determination unit 12 may determine whether or not sensor information related to the image sensor 21 satisfies a third condition. For example, the sensor information may include an amount of noise appearing in the image. At this time, the third condition may include a condition that the amount of noise is within a third range. The amount of noise can be determined from the gain setting, the aperture value, the environmental temperature, the noise characteristics, the dirt on the lens, the misalignment of the lens, or the like included in the meta information.

Alternatively, in a case where the detection rate related to the detection of the predetermined event does not satisfy the first condition, the retraining necessity determination unit 12 may determine whether or not object information related to an object present around the image sensor 21 satisfies a fourth condition. For example, the object information may include a type of an object recognized from the image. At this time, the fourth condition may include a condition that the type of the object recognized from the image appears in the training images used in training the inference model M1. The type of the object can be determined from the label attached to the subject, the difference in position of the light source, the difference in position of the subject, or the like included in the meta information.

Alternatively, the object information may include the posture of the object recognized from the image. At this time, the fourth condition may include a condition that the object recognized from the image is in a predetermined posture. The posture of the object can be determined from the posture of the subject included in the meta information.

### (Training data generation unit 13)

The training data generation unit 13 generates training images (second training data) on the basis of the fact that the detection rate related to the detection of the predetermined event does not satisfy the first condition. More specifically, in the embodiment of the present disclosure, the training data generation unit 13 generates the training images using a simulation technique on the basis of the fact that the detection rate related to the detection of the predetermined event does not satisfy the first condition.

The simulation technique may include a technique of generating the training images on the basis of the environment information related to the environment where the image sensor 21 is present. That is, the training data generation unit 13 can generate the training images on the basis of the fact that the condition that the detection rate related to the detection of the predetermined event is within the expected range is not satisfied and the environment information does not satisfy the second condition.

Alternatively, the simulation technique may include a technique of generating the training images on the basis of the sensor information related to the image sensor 21. That is, the training data generation unit 13 can generate the training images on the basis of the fact that the condition that the detection rate related to the detection of the predetermined event is within the expected range is not satisfied and the sensor information does not satisfy the third condition.

Alternatively, the simulation technique may include a technique of generating the training images on the basis of the object information related to the object present around the image sensor 21. That is, the training data generation unit 13 can generate the training images on the basis of the fact that the condition that the detection rate related to the detection of the predetermined event is within the expected range is not satisfied and the object information does not satisfy the fourth condition.

Note that the simulation technique includes a technique of arranging an object in a virtual space, adjusting a light source (for example, the position, orientation, or brightness of the light source) in the virtual space, and generating a CG image on the basis of the virtual space in which the object is arranged and the light source is adjusted. For example, the CG image can be generated by ray tracing or the like. Moreover, the simulation technique may include a sensor simulation technique of performing a noise parameter adjustment on the generated CG image in accordance with the sensor information.

That is, in generating the CG image, the training data generation unit 13 can adjust the light source on the basis of the environment information. Alternatively, in generating the CG image, the training data generation unit 13 can control the object arranged in the virtual space on the basis of the object information. Alternatively, in the sensor simulation, the training data generation unit 13 can adjust the noise parameters added to the CG image on the basis of the sensor information.

The training data generation unit 13 generates ground-truth data corresponding to the generated training images, and attaches the generated ground-truth data to the training images.

### (Retraining unit 14)

The retraining unit 14 performs retraining on the basis of the training images generated by the training data generation unit 13 to obtain an inference model (second inference model). More specifically, the retraining unit 14 performs retraining on the basis of the training images and the ground-truth data attached to the training images to generate the inference model.

For example, the retraining unit 14 may perform transfer learning on the basis of the training images generated by the training data generation unit 13 using the same inference model as the inference model M1 stored in the memory mounted on the image sensor 21. Note that a domain adaptation technique may be used for such transfer learning.

Alternatively, the retraining unit 14 may perform training from scratch on the basis of the training images generated by the training data generation unit 13 without using the same inference model as the inference model M1 stored in the memory mounted on the image sensor 21.

The retraining unit 14 outputs the generated inference model to the image sensor 21. As a result, the inference model M1 stored in the memory mounted on the image sensor 21 is updated to the inference model output from the retraining unit 14.

As described above, according to the embodiment of the present disclosure, it is possible to reduce the cost of collecting the training images by automatically generating the training images required for generating the inference model. Moreover, according to the embodiment of the present disclosure, the training images can be generated in accordance with the environment where the image sensor is present, the camera parameters of the image sensor, or the object present around the image sensor.

The above is the description of the configuration example of the information processing system 1 according to the embodiment of the present disclosure.

### (1.2. Operation example)

Next, an example of how the information processing system 1 according to the embodiment of the present disclosure operates will be described.

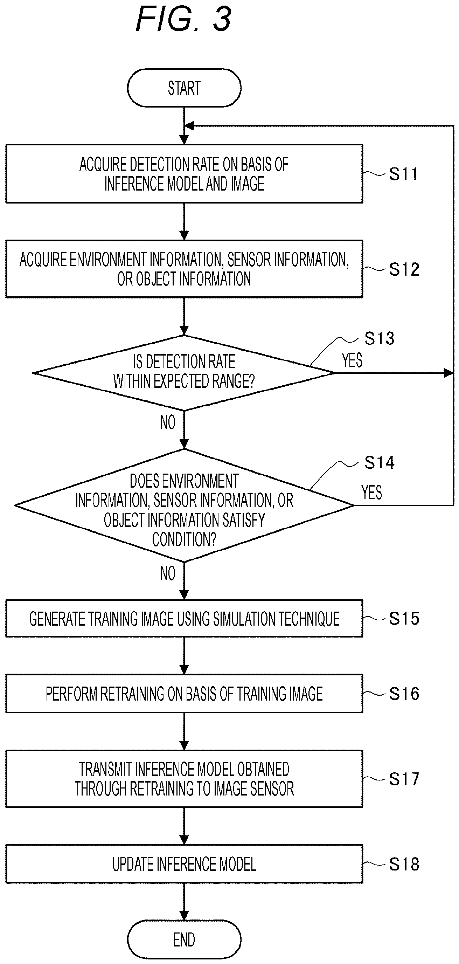

Fig. 3 is a flowchart illustrating the example of how the information processing system 1 according to the embodiment of the present disclosure operates. The arithmetic device mounted on the image sensor 21 inputs a captured image into the inference model M1 to obtain, as an inference result, an output from the inference model M1 in response to the input of the image into the inference model M1. In the embodiment of the present invention, the arithmetic device mounted on the image sensor 21 can obtain, as the inference result, the number of times of detection of whether or not the predetermined event appears in the images (detection times), and the number of times of determination that the predetermined event appears in the images (event determination times) among the detection times.

The arithmetic device mounted on the image sensor 21 calculates the detection rate related to the detection of the predetermined event. The image sensor 21 transmits the inference result and the detection rate related to the detection of the predetermined event to the server 10 over the network N1.

In the server 10, the meta-information acquisition unit 11 acquires the detection rate from the image sensor 21 over the network N1 (S11). Moreover, the meta-information acquisition unit 11 acquires the environment information related to the environment where the image sensor 21 is present, the sensor information related to the image sensor 21, or the object information related to the object present around the image sensor 21 (S12). The environment information, the sensor information, or the object information may be acquired from the image sensor 21, or may be acquired on the basis of the image acquired from the image sensor 21.

The retraining necessity determination unit 12 determines whether or not the condition that the detection rate related to the detection of the predetermined event is within the expected range is satisfied (S13). In a case where the condition that the detection rate is within the expected range is satisfied ("YES" in S13), the operation proceeds to S11. On the other hand, in a case where the condition that the detection rate is within the expected range is not satisfied ("NO" in S13), the retraining necessity determination unit 12 determines whether or not the environment information, the sensor information, or the object information satisfies the condition (S14).

In a case where the environment information, the sensor information, or the object information satisfies the condition ("YES" in S14), the operation proceeds to S11. On the other hand, in a case where the environment information, the sensor information, or the object information does not satisfy the condition ("NO" in S14), the training data generation unit 13 generates training images using the simulation technique (S15). Furthermore, the training data generation unit 13 attaches the ground-truth data to the training images.

The retraining unit 14 performs retraining on the basis of the training images generated by the training data generation unit 13 and the ground-truth data attached to the training images to generate an inference model (S16). The retraining unit 14 transmits the generated inference model to the image sensor 21 (S17). The arithmetic device mounted on the image sensor 21 updates the inference model M1 stored in the memory to the inference model transmitted from the retraining unit 14 (S18).

The above is the description of the example of how the information processing system 1 according to the embodiment of the present disclosure operates.

### (1.3. Functional details)

Next, functional details of the information processing system 1 according to the embodiment of the present disclosure will be described. More specifically, first to fourth examples will be sequentially described as examples of processing performed by the information processing system 1 according to the embodiment of the present disclosure.

### (First example)

First, the first example of processing performed by the information processing system 1 according to the embodiment of the present disclosure will be described. More specifically, the first example can correspond to an example where training images are generated in accordance with the brightness of the environment where the image sensor 21 is present.

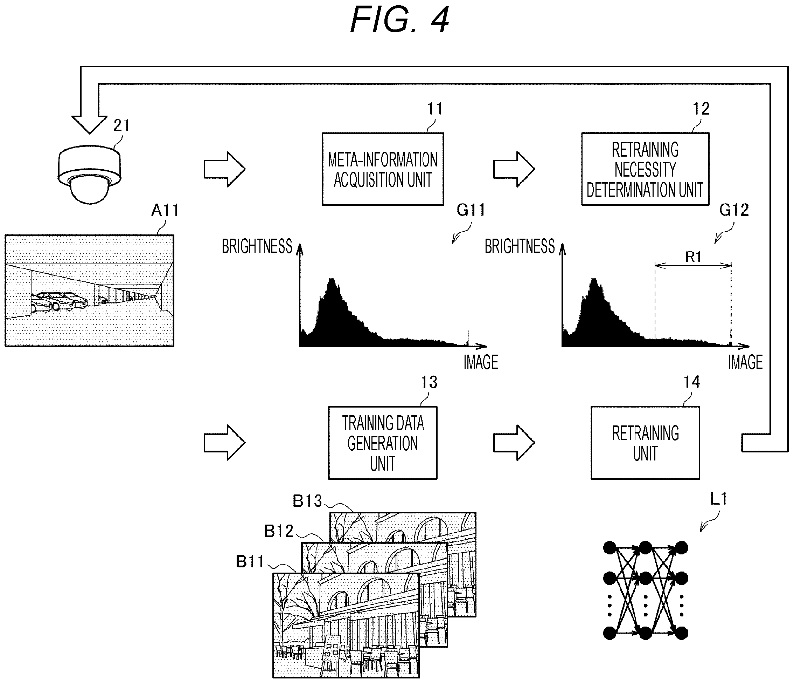

Fig. 4 is a diagram for describing the first example of processing performed by the information processing system 1 according to the embodiment of the present disclosure. With reference to Fig. 4, the image sensor 21 is illustrated. Here, a case where the image sensor 21 is installed in an urban area (for example, a shopping mall or the like) to detect a suspicious person as the predetermined event is mainly assumed. A place where the image sensor 21 is installed and a target to be detected by the arithmetic device mounted on the image sensor 21, however, are not limited to any specific place and any specific target, respectively.

Furthermore, with reference to Fig. 4, an image All captured by the image sensor 21 is illustrated. In the example illustrated in Fig. 4, the environment where the image sensor 21 is present is dim, and the image A11 captured by the image sensor 21 becomes dim accordingly, so that normal detection of the predetermined event is hindered. The arithmetic device mounted on the image sensor 21 inputs the captured image into the inference model to obtain, as an inference result, an output from the inference model in response to the input of the image into the inference model.

The arithmetic device mounted on the image sensor 21 obtains, as the inference result, the number of times of detection of whether or not a suspicious person appears in the images (detection times), and the number of times of determination that the suspicious person appears in the images (event determination times) among the detection times. Moreover, the arithmetic device mounted on the image sensor 21 calculates, as a detection rate related to the detection of the suspicious person, a ratio of the number of times of detection of whether or not the suspicious person appears to the number of images (that is, the number of frames) subjected to inference.

The image sensor 21 transmits the inference result and the images thus obtained to the server 10 over the network N1. The meta-information acquisition unit 11 acquires the images from the image sensor 21 over the network N1. Moreover, on the basis of the images acquired from image sensor 21, the meta-information acquisition unit 11 calculates the brightness of the images as an example of the brightness of the environment where the image sensor 21 is present.

More specifically, the meta-information acquisition unit 11 calculates the brightness of the images on the basis of an average pixel value of the images acquired from the image sensor 21. A graph G11 shows brightness distribution of each image. Note that the brightness of the environment may be acquired by another method. For example, in a case where the current time is transmitted as the meta information from image sensor 21, the meta-information acquisition unit 11 may estimate the brightness of the environment on the basis of the current time.

The retraining necessity determination unit 12 determines whether or not the condition that the detection rate is within the expected range is satisfied. Moreover, the retraining necessity determination unit 12 determines whether or not a condition that the brightness of the images is within an expected range is satisfied. A graph G12 shows expected brightness R1. For example, in a case where the brightness of the images is less than or equal to 10% that is the minimum value of the expected brightness R1, it may be determined that the brightness of the images is out of the expected range.

The training data generation unit 13 generates, on the basis of the fact that the condition that the detection rate is within the expected range is not satisfied and the condition that the brightness of the images is within the expected range is not satisfied, training images in accordance with the brightness of the images. With reference to Fig. 4, training images B11 to B13 are illustrated as examples of the training images generated by the training data generation unit 13.

More specifically, the training data generation unit 13 adjusts the brightness of the light source on the basis of the brightness of the images, and generates a CG image on the basis of the light source after the brightness adjustment. Then, the training data generation unit 13 applies the sensor simulation technique to the generated CG image to generate the training images. The training data generation unit 13 generates ground-truth data (for example, the presence or absence of the suspicious person or the like) corresponding to the generated training images, and attaches the generated ground-truth data to the training images.

The retraining unit 14 and the retraining unit 14 performs retraining on the basis of the training images and the ground-truth data attached to the training images to generate an inference model L1. As described above, the retraining unit 14 may perform transfer learning on the basis of the training images using the same inference model as the inference model stored in the memory mounted on the image sensor 21. Alternatively, the retraining unit 14 may perform training from scratch on the basis of the training images without using the same inference model as the inference model stored in the memory mounted on the image sensor 21.

The retraining unit 14 outputs the generated inference model to the image sensor 21. As a result, the inference model stored in the memory mounted on the image sensor 21 is updated to the inference model L1 output from the retraining unit 14.

The above is the description of the first example of processing performed by the information processing system 1 according to the embodiment of the present disclosure.

### (Second example)

Next, the second example of processing performed by the information processing system 1 according to the embodiment of the present disclosure will be described. More specifically, the second example can correspond to an example where training images are generated in accordance with the amount of noise appearing in images.

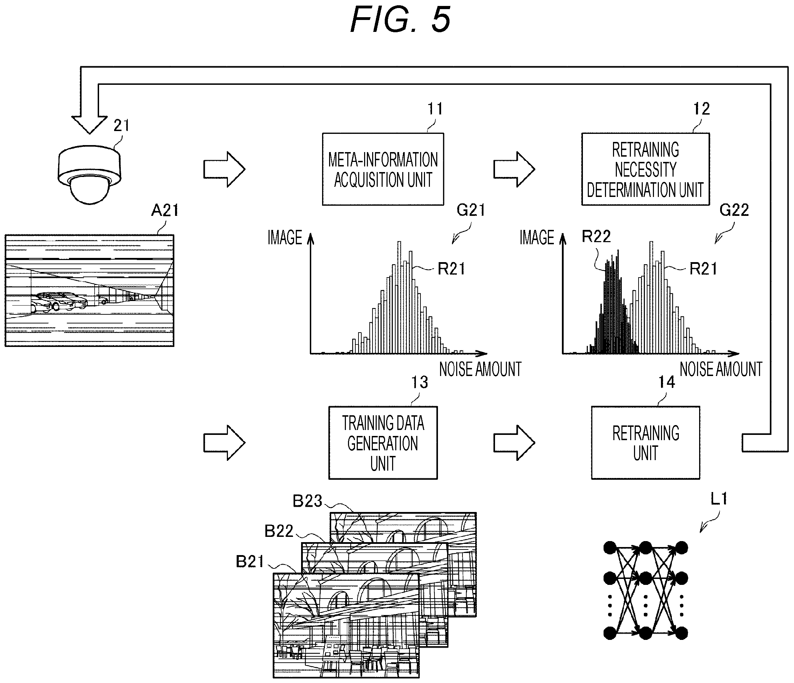

Fig. 5 is a diagram for describing the second example of processing performed by the information processing system 1 according to the embodiment of the present disclosure. With reference to Fig. 5, the image sensor 21 is illustrated. Here, a case where the image sensor 21 is installed in an urban area (for example, a shopping mall or the like) to detect a suspicious person as the predetermined event is mainly assumed. A place where the image sensor 21 is installed and a target to be detected by the arithmetic device mounted on the image sensor 21, however, are not limited to any specific place and any specific target, respectively.

Furthermore, with reference to Fig. 5, an image A21 captured by the image sensor 21 is illustrated. In the example illustrated in Fig. 5, the amount of noise appearing in the image A21 is large, so that normal detection of the predetermined event is hindered. The arithmetic device mounted on the image sensor 21 inputs the captured image into the inference model to obtain, as an inference result, an output from the inference model in response to the input of the image into the inference model.

The arithmetic device mounted on the image sensor 21 obtains, as the inference result, the number of times of detection of whether or not a suspicious person appears in the images (detection times), and the number of times of determination that the suspicious person appears in the images (event determination times) among the detection times. Moreover, the arithmetic device mounted on the image sensor 21 calculates, as a detection rate related to the detection of the suspicious person, a ratio of the number of times of detection of whether or not the suspicious person appears to the number of images (that is, the number of frames) subjected to inference.

The image sensor 21 transmits the inference result and the images thus obtained to the server 10 over the network N1. The meta-information acquisition unit 11 acquires the images from the image sensor 21 over the network N1. Moreover, the meta-information acquisition unit 11 calculates an image noise amount on the basis of the images acquired from the image sensor 21.

More specifically, the meta-information acquisition unit 11 calculates the noise amount of each of a plurality of frames acquired from image sensor 21. A graph G21 shows distribution of the number of images (the number of frames) for each noise amount. Note that the image noise amount may be acquired by another method. For example, in a case where the gain setting, the aperture value, the environmental temperature, the noise characteristics, the dirt on the lens, or the misalignment of the lens is transmitted from the image sensor 21 as the meta information, the meta-information acquisition unit 11 may calculate the image noise amount on the basis of the gain setting, the aperture value, the environmental temperature, the noise characteristics, the dirt on the lens, or the misalignment of the lens.

The retraining necessity determination unit 12 determines whether or not the condition that the detection rate is within the expected range is satisfied. Moreover, the retraining necessity determination unit 12 determines whether or not a condition that the image noise amount is within an expected range is satisfied. A graph G22 shows an expected noise amount R22. For example, in a case where the standard deviation of the image noise amount is greater than an expected value by 30% or more, it may be determined that the image noise amount is out of the expected range.

The training data generation unit 13 generates, on the basis of the fact the condition that the detection rate is within the expected range is not satisfied and the condition that the image noise amount is within the expected range is not satisfied, training images in accordance with the image noise. With reference to Fig. 5, training images B21 to B23 are illustrated as examples of the training images generated by the training data generation unit 13.

More specifically, the training data generation unit 13 generates a CG image. Then, the training data generation unit 13 applies the sensor simulation technique of adjusting noise parameters in accordance with the image noise amount to the CG image to generate the training images.

Note that the training images may be generated on the basis of images obtained by an image sensor belonging to the same lot as a lot to which the image sensor 21 belongs, or may be generated on the basis of images obtained by an image sensor belonging to a lot different from the lot to which the image sensor 21 belongs.

The training data generation unit 13 generates ground-truth data (for example, the presence or absence of the suspicious person or the like) corresponding to the generated training images, and attaches the generated ground-truth data to the training images.

The retraining unit 14 and the retraining unit 14 performs retraining on the basis of the training images and the ground-truth data attached to the training images to generate an inference model L1. As described above, the retraining unit 14 may perform transfer learning on the basis of the training images using the same inference model as the inference model stored in the memory mounted on the image sensor 21. Alternatively, the retraining unit 14 may perform training from scratch on the basis of the training images without using the same inference model as the inference model stored in the memory mounted on the image sensor 21.

The retraining unit 14 outputs the generated inference model to the image sensor 21. As a result, the inference model stored in the memory mounted on the image sensor 21 is updated to the inference model L1 output from the retraining unit 14.

The above is the description of the second example of processing performed by the information processing system 1 according to the embodiment of the present disclosure.

### (Third example)

Next, the third example of processing performed by the information processing system 1 according to the embodiment of the present disclosure will be described. More specifically, the third example can correspond to an example where training images are generated on the basis of the type of an object recognized from the images.

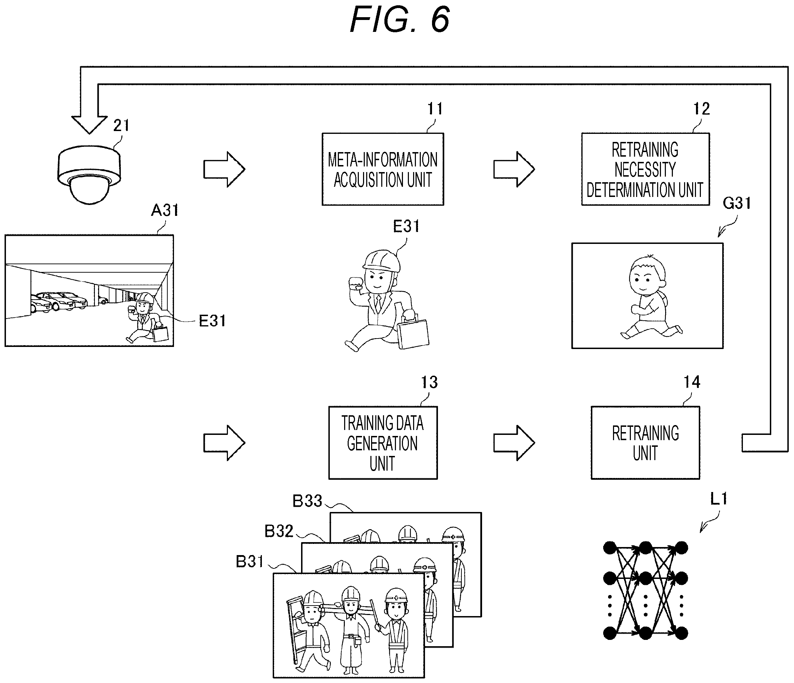

Fig. 6 is a diagram for describing the third example of processing performed by the information processing system 1 according to the embodiment of the present disclosure. With reference to Fig. 6, the image sensor 21 is illustrated. Here, a case where the image sensor 21 is installed in an urban area (for example, a shopping mall or the like) to detect a suspicious person as the predetermined event is mainly assumed. A place where the image sensor 21 is installed and a target to be detected by the arithmetic device mounted on the image sensor 21, however, are not limited to any specific place and any specific target, respectively.

Furthermore, with reference to Fig. 6, an image A31 captured by the image sensor 21 is illustrated. In the example illustrated in Fig. 6, a person E31 wearing a helmet appears in the image A31, so that normal detection of the predetermined event is hindered. The arithmetic device mounted on the image sensor 21 inputs the captured image into the inference model to obtain, as an inference result, an output from the inference model in response to the input of the image into the inference model.

The arithmetic device mounted on the image sensor 21 obtains, as the inference result, the number of times of detection of whether or not a suspicious person appears in the images (detection times), and the number of times of determination that the suspicious person appears in the images (event determination times) among the detection times. Moreover, the arithmetic device mounted on the image sensor 21 calculates, as a detection rate related to the detection of the suspicious person, a ratio of the number of times of detection of whether or not the suspicious person appears to the number of images (that is, the number of frames) subjected to inference.

The image sensor 21 transmits the inference result and the images thus obtained to the server 10 over the network N1. The meta-information acquisition unit 11 acquires the images from the image sensor 21 over the network N1. Moreover, the meta-information acquisition unit 11 recognizes, on the basis of the images acquired from the image sensor 21, the type of the object appearing in the images. Here, a case where the person E31 wearing a helmet is recognized as the type of the object is assumed. Note that the recognition of the type of the object may be performed by the arithmetic device mounted on the image sensor 21.

The retraining necessity determination unit 12 determines whether or not the condition that the detection rate is within the expected range is satisfied. Moreover, the retraining necessity determination unit 12 determines whether or not a condition that an object of the same type as the type of the object recognized from the images appears in the training images used in training the inference model is satisfied. In the example illustrated in Fig. 6, the person wearing a helmet is not appearing in a training image G31 used in training the inference model.

The training data generation unit 13 generates, on the basis of the fact that the condition that the detection rate is within the expected range is not satisfied and the condition that the object of the same type as the type of the object recognized from the images appears in the training images used in training the inference model is not satisfied, training images in which the object of the same type as the recognized type appears. With reference to Fig. 6, training images B31 to B33 in which a person wearing a helmet or a hat, which is the object of the same type as the recognized type, appears are illustrated as examples of the training images generated by the training data generation unit 13.

More specifically, the training data generation unit 13 arranges, as an object, a person wearing a helmet or a hat, which is the object of the same type as the recognized type, in a virtual space, and generates a CG image on the basis of the virtual space in which the object is arranged and a light source of the virtual space. Then, the training data generation unit 13 applies the sensor simulation technique to the generated CG image to generate the training images. The training data generation unit 13 generates ground-truth data (for example, the presence or absence of the suspicious person or the like) corresponding to the generated training images, and attaches the generated ground-truth data to the training images.

The retraining unit 14 and the retraining unit 14 performs retraining on the basis of the training images and the ground-truth data attached to the training images to generate an inference model L1. As described above, the retraining unit 14 may perform transfer learning on the basis of the training images using the same inference model as the inference model stored in the memory mounted on the image sensor 21. Alternatively, the retraining unit 14 may perform training from scratch on the basis of the training images without using the same inference model as the inference model stored in the memory mounted on the image sensor 21.

The retraining unit 14 outputs the generated inference model to the image sensor 21. As a result, the inference model stored in the memory mounted on the image sensor 21 is updated to the inference model L1 output from the retraining unit 14.

The above is the description of the third example of processing performed by the information processing system 1 according to the embodiment of the present disclosure.

### (Fourth example)

Next, the fourth example of processing performed by the information processing system 1 according to the embodiment of the present disclosure will be described. More specifically, the fourth example can correspond to an example where training images are generated on the basis of a posture of an object recognized from the images.

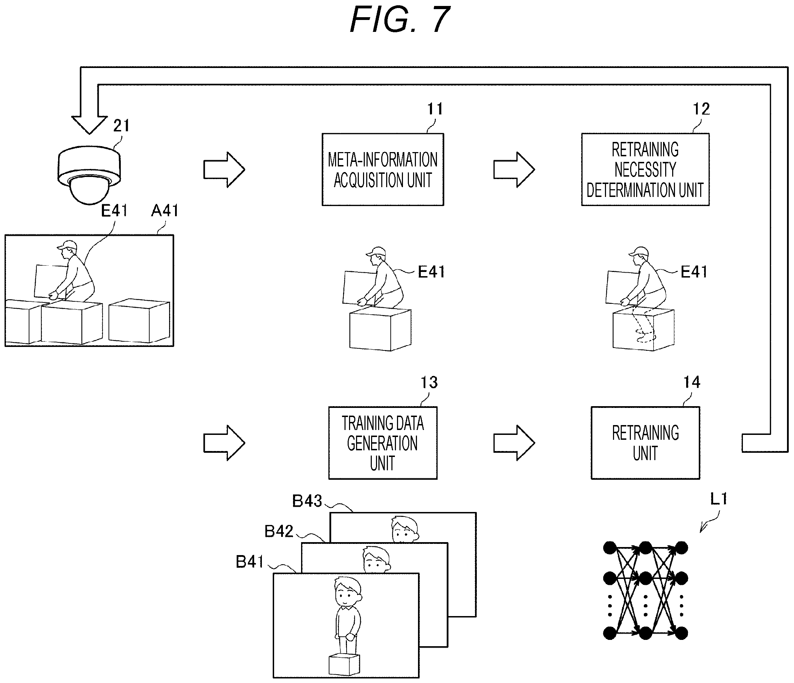

Fig. 7 is a diagram for describing the fourth example of processing performed by the information processing system 1 according to the embodiment of the present disclosure. With reference to Fig. 7, the image sensor 21 is illustrated. Here, a case where the image sensor 21 is installed in a factory and a suspicious person is detected as the predetermined event is mainly assumed. A place where the image sensor 21 is installed and a target to be detected by the arithmetic device mounted on the image sensor 21, however, are not limited to any specific place and any specific target, respectively.

Furthermore, with reference to Fig. 7, an image A41 captured by the image sensor 21 is illustrated. In the example illustrated in Fig. 7, a person E41 having the lower half of his/her body hidden by an obstacle appears in the image A41, so that normal detection of the predetermined event is hindered. The arithmetic device mounted on the image sensor 21 inputs the captured image into the inference model to obtain, as an inference result, an output from the inference model in response to the input of the image into the inference model.

The arithmetic device mounted on the image sensor 21 obtains, as the inference result, the number of times of detection of whether or not a suspicious person appears in the images (detection times), and the number of times of determination that the suspicious person appears in the images (event determination times) among the detection times. Moreover, the arithmetic device mounted on the image sensor 21 calculates, as a detection rate related to the detection of the suspicious person, a ratio of the number of times of detection of whether or not the suspicious person appears to the number of images (that is, the number of frames) subjected to inference.

The arithmetic device mounted on the image sensor 21 transmits the inference result and the images thus obtained to the server 10 over the network N1. The meta-information acquisition unit 11 acquires the images from the image sensor 21 over the network N1. Moreover, the meta-information acquisition unit 11 recognizes, on the basis of the images acquired from the image sensor 21, the posture of the object appearing in the images. Here, a case where the person E41 having the lower half of his/her body hidden by the obstacle is recognized as the posture of the object is assumed. Note that the recognition of the posture of the object may be performed by the image sensor 21.

The retraining necessity determination unit 12 determines whether or not the condition that the detection rate is within the expected range is satisfied. Moreover, the retraining necessity determination unit 12 determines whether or not the condition that the object recognized from the images is in the predetermined posture is satisfied. In the example illustrated in Fig. 7, a condition that the whole body of the person E41 is recognized from the images is not satisfied.

The training data generation unit 13 generates, on the basis of the fact that the condition that the detection rate is within the expected range is not satisfied and the condition that the object recognized from the images is in the predetermined posture is not satisfied, training images in which an object that is in the same posture as the recognized posture appears. With reference to Fig. 7, training images B41 to B43 in which a person having the lower half of his/her body hidden by an obstacle, which is the object that is in the same posture as the recognized posture, appears are illustrated as examples of the training images generated by the training data generation unit 13.

More specifically, the training data generation unit 13 arranges, as an object, the person having the lower half of his/her body hidden by the obstacle, which is the object that is in the same posture as the recognized posture, in a virtual space, and generates a CG image on the basis of the virtual space in which the object is arranged and a light source of the virtual space. Then, the training data generation unit 13 applies the sensor simulation technique to the generated CG image to generate the training images. The training data generation unit 13 generates ground-truth data (for example, the presence or absence of the suspicious person or the like) corresponding to the generated training images, and attaches the generated ground-truth data to the training images.

The retraining unit 14 and the retraining unit 14 performs retraining on the basis of the training images and the ground-truth data attached to the training images to generate an inference model L1. As described above, the retraining unit 14 may perform transfer learning on the basis of the training images using the same inference model as the inference model stored in the memory mounted on the image sensor 21. Alternatively, the retraining unit 14 may perform training from scratch on the basis of the training images without using the same inference model as the inference model stored in the memory mounted on the image sensor 21.

The retraining unit 14 outputs the generated inference model to the image sensor 21. As a result, the inference model stored in the memory mounted on the image sensor 21 is updated to the inference model L1 output from the retraining unit 14.

The above is the description of the fourth example of processing performed by the information processing system 1 according to the embodiment of the present disclosure.

The above is the description of the functional details of the information processing system 1 according to the embodiment of the present disclosure.

### <2. Hardware configuration example>

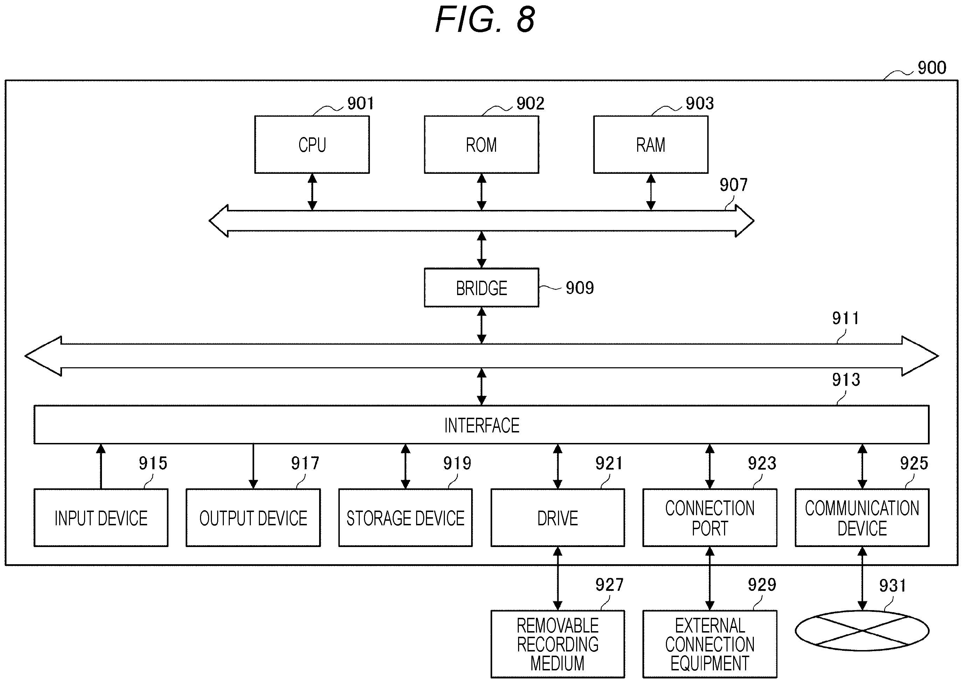

Next, a hardware configuration example of an information processing device 900 as an example of the server 10 according to the embodiment of the present disclosure will be described with reference to Fig. 8. Fig. 8 is a block diagram illustrating the hardware configuration example of the information processing device 900. Note that the server 10 does not necessarily have all of the hardware configuration illustrated in Fig. 8, and a part of the hardware configuration illustrated in Fig. 8 need not exist in the server 10.

As illustrated in Fig. 8, the information processing device 900 includes a central processing unit (CPU) 901, a read only memory (ROM) 903, and a random access memory (RAM) 905. Furthermore, the information processing device 900 may include a host bus 907, a bridge 909, an external bus 911, an interface 913, an input device 915, an output device 917, a storage device 919, a drive 921, a connection port 923, and a communication device 925. The information processing device 900 may have a processing circuit called a digital signal processor (DSP) or an application specific integrated circuit (ASIC) instead of or in combination with the CPU 901.

The CPU 901 functions as an arithmetic processor and a control device, and controls overall operation in the information processing device 900 or a part thereof, in accordance with various programs recorded in the ROM 903, the RAM 905, the storage device 919, or a removable recording medium 927. The ROM 903 stores programs, calculation parameters, and the like used by the CPU 901. The RAM 905 temporarily stores a program used in execution by the CPU 901, parameters that change as appropriate during the execution, and the like. The CPU 901, the ROM 903, and the RAM 905 are mutually connected by the host bus 907 including an internal bus such as a CPU bus. Moreover, the host bus 907 is connected to the external bus 911 such as a peripheral component interconnect/interface (PCI) bus via the bridge 909.

The input device 915 is, for example, a device, such as a button, operated by the user. The input device 915 may include a mouse, a keyboard, a touch panel, a switch, a lever, or the like. Furthermore, the input device 915 may further include a microphone that detects voice of the user. The input device 915 may be, for example, a remote control device using infrared rays or other radio waves, or may be external connection equipment 929 such as a mobile phone adapted to the operation of the information processing device 900. The input device 915 includes an input control circuit that generates and outputs an input signal to the CPU 901 on the basis of the information input by the user. The user operates the input device 915 to input various kinds of data or gives an instruction to perform a processing operation, to the information processing device 900. Furthermore, an imaging device 933 as described later can function as the input device by capturing an image of motion of the user's hand, the user's finger, or the like. At this time, a pointing position may be determined in accordance with the motion of the hand or the orientation of the finger.

The output device 917 includes a device that can visually or audibly notify the user of acquired information. The output device 917 may be, for example, a display device such as a liquid crystal display (LCD) or an organic electro-luminescence (EL) display, a sound output device such as a speaker or a headphone, or the like. Furthermore, the output device 917 may include a plasma display panel (PDP), a projector, a hologram, a printer device, or the like. The output device 917 outputs a result of processing performed by the information processing device 900 as a video such a text or an image, or outputs the result as a sound such as voice or audio. Furthermore, the output device 917 may include a light or the like in order to brighten the surroundings.

The storage device 919 is a data storage device configured as an example of a storage unit of the information processing device 900. The storage device 919 includes, for example, a magnetic storage device such as a hard disk drive (HDD), a semiconductor storage device, an optical storage device, a magneto-optical storage device, or the like. The storage device 919 stores programs executed by the CPU 901 and various kinds of data, various kinds of data acquired from the outside, and the like.

The drive 921 is a reader/writer for the removable recording medium 927, such as a magnetic disk, an optical disc, a magneto-optical disk, or a semiconductor memory, and is built in or externally attached to the information processing device 900. The drive 921 reads information recorded in the mounted removable recording medium 927, and outputs the read information to the RAM 905. Furthermore, the drive 921 writes record in the removable recording medium 927 that is mounted.

The connection port 923 is a port for directly connecting equipment to the information processing device 900. The connection port 923 may be, for example, a universal serial bus (USB) port, an IEEE1394 port, a small computer system interface (SCSI) port, or the like. Furthermore, the connection port 923 may be an RS-232C port, an optical audio terminal, a high-definition multimedia interface (HDMI (registered trademark)) port, or the like. By connecting the external connection equipment 929 to the connection port 923, various kinds of data can be exchanged between the information processing device 900 and the external connection equipment 929.

The communication device 925 is, for example, a communication interface including a communication device or the like for connecting to a network 931. The communication device 925 may be, for example, a communication card for a wired or wireless local area network (LAN), Bluetooth (registered trademark), wireless USB (WUSB), or the like. Furthermore, the communication device 925 may be a router for optical communication, a router for asymmetric digital subscriber line (ADSL), a modem for various types of communication, or the like. For example, the communication device 925 transmits and receives signals and the like to and from the Internet and other communication equipment, by using a predetermined protocol such as TCP/IP. Furthermore, the network 931 connected to the communication device 925 is a network connected in a wired or wireless manner, and is, for example, the Internet, a home LAN, infrared communication, radio wave communication, satellite communication, or the like.

### <3. Conclusion>

According to the embodiment of the present disclosure, provided is an information processing device including: a training data generation unit configured to generate second training data on the basis of the fact that detection information related to detection of a predetermined event does not satisfy a first condition, the detection information being obtained on the basis of a first inference model generated through training based on first training data and sensor data detected by a sensor; and a retraining unit configured to perform retraining on the basis of the second training data to obtain a second inference model. Such a configuration allows a reduction in cost of collecting training data required for generating an inference model.

While the preferred embodiment of the present disclosure has been described above in detail with reference to the drawings, the technical scope of the present disclosure is not limited to such examples. It is obvious that those with ordinary skill in the technical field of the present disclosure can conceive various alterations or corrections within the scope of the technical idea recited in the claims, and it is naturally understood that these alterations or corrections also fall within the technical scope of the present disclosure.

For example, the above is the description given mainly of the case where the sensor included in the information processing system 1 is an image sensor. Alternatively, the sensor included in the information processing system 1 may be a sensor other than the image sensor. For example, the sensor included in the information processing system 1 may be a microphone, a distance sensor, a vibration sensor, a gyro sensor, an acceleration sensor, a pressure sensor, an odor sensor, a thermal sensor, an infrared sensor, an ultraviolet sensor, or the like. Even in such a case, it is only required that processing similar to the above-described processing performed on images be performed on sensor data obtained by the sensor.

Furthermore, the effects described in the present specification are merely exemplary or illustrative, and are not restrictive. In other words, the technique according to the present disclosure can produce other effects that are apparent to those skilled in the art from the description of the present specification, in combination with or instead of the effects described above.

Note that the following configurations also fall within the technical scope of the present disclosure.
(1) An information processing device including:
   a training data generation unit configured to generate second training data on the basis of a fact that detection information related to detection of a predetermined event does not satisfy a first condition, the detection information being obtained on the basis of a first inference model generated through training based on first training data and sensor data detected by a sensor; and
   a retraining unit configured to perform retraining on the basis of the second training data to obtain a second inference model.
(2) The information processing device according to the above (1), in which
   the training data generation unit generates the second training data using a simulation technique on the basis of the fact that the detection information does not satisfy the first condition.
(3) The information processing device according to the above (2), in which
   the simulation technique includes a technique of generating the second training data on the basis of environment information related to an environment where the sensor is present, sensor information related to the sensor, or object information related to an object present around the sensor.
(4) The information processing device according to the above (3), in which
   the training data generation unit generates the second training data on the basis of a fact that the detection information does not satisfy the first condition and the environment information does not satisfy a second condition.
(5) The information processing device according to the above (4), in which
   the environment information includes brightness of the environment where the sensor is present, and
   the second condition includes a condition that the brightness is within a second range.
(6) The information processing device according to the above (5), in which
   the training data generation unit generates, on the basis of a fact that the detection information does not satisfy the first condition and the condition that the brightness is within the second range is not satisfied, the second training data in accordance with the brightness.
(7) The information processing device according to the above (3), in which
   the training data generation unit generates the second training data on the basis of a fact that the detection information does not satisfy the first condition and the sensor information does not satisfy a third condition.
(8) The information processing device according to the above (7), in which
   the sensor information includes an amount of noise appearing in the sensor data, and
   the third condition includes a condition that the amount of noise is within a third range.
(9) The information processing device according to the above (8), in which
   the training data generation unit generates, on the basis of a fact that the detection information does not satisfy the first condition and the condition that the amount of noise is within the third range is not satisfied, the second training data in accordance with the amount of noise.
(10) The information processing device according to the above (3), in which
   the training data generation unit generates the second training data on the basis of a fact that the detection information does not satisfy the first condition and the object information does not satisfy a fourth condition.
(11) The information processing device according to the above (10), in which
   the object information includes a type of an object recognized from the sensor data, and
   the fourth condition includes a condition that an object of the type appears in the first training data.
(12) The information processing device according to the above (11), in which
   the training data generation unit generates the second training data in which the object of the type appears on the basis of a fact that the detection information does not satisfy the first condition and the condition that the type of the object appears in the first training data is not satisfied.
(13) The information processing device according to the above (10), in which
   the object information includes a posture of an object recognized from the sensor data, and
   the fourth condition includes a condition that the posture of the object includes a predetermined posture.
(14) The information processing device according to the above (13), in which
   the training data generation unit generates the second training data in which an object in the posture appears on the basis of a fact that the detection information does not satisfy the first condition and a condition that the posture of the object includes the predetermined posture is not satisfied.
(15) The information processing device according to any one of the above (1) to (14), in which
   the detection information includes a detection rate related to the detection of the predetermined event, and
   the first condition includes a condition that the detection rate is within a first range.
(16) The information processing device according to any one of the above (1) to (15), in which
   the retraining unit outputs the second inference model to the sensor.
(17) The information processing device according to the above (16), in which
   the first inference model is stored in a memory mounted on the sensor, and
   the first inference model stored in the memory mounted on the sensor is updated to the second inference model output by the retraining unit.
(18) The information processing device according to any one of the above (1) to (17), in which
   the sensor includes an image sensor configured to detect an image as the sensor data.
(19) An information processing method including:
   generating second training data on the basis of a fact that detection information related to detection of a predetermined event does not satisfy a first condition, the detection information being obtained on the basis of a first inference model generated through training based on first training data and sensor data detected by a sensor; and
   obtaining a second inference model by causing a processor to perform retraining on the basis of the second training data.
(20) A program causing a computer to function as an information processing device, the information processing device including:
   a training data generation unit configured to generate second training data on the basis of a fact that detection information related to detection of a predetermined event does not satisfy a first condition, the detection information being obtained on the basis of a first inference model generated through training based on first training data and sensor data detected by a sensor; and
   a retraining unit configured to perform retraining on the basis of the second training data to obtain a second inference model.

### REFERENCE SIGNS LIST

- 1: Information processing system
- 10: Server
- 11: Meta-information acquisition unit
- 12: Retraining necessity determination unit
- 13: Training data generation unit
- 14: Retraining unit
- 21 to 23: Image sensor
- M1 to M3: Inference model

## Claims

1. An information processing device comprising:
a training data generation unit configured to generate second training data on a basis of a fact that detection information related to detection of a predetermined event does not satisfy a first condition, the detection information being obtained on a basis of a first inference model generated through training based on first training data and sensor data detected by a sensor; and
a retraining unit configured to perform retraining on a basis of the second training data to obtain a second inference model.

2. The information processing device according to claim 1, wherein
the training data generation unit generates the second training data using a simulation technique on a basis of the fact that the detection information does not satisfy the first condition.

3. The information processing device according to claim 2, wherein
the simulation technique includes a technique of generating the second training data on a basis of environment information related to an environment where the sensor is present, sensor information related to the sensor, or object information related to an object present around the sensor.

4. The information processing device according to claim 3, wherein
the training data generation unit generates the second training data on a basis of a fact that the detection information does not satisfy the first condition and the environment information does not satisfy a second condition.

5. The information processing device according to claim 4, wherein
the environment information includes brightness of the environment where the sensor is present, and
the second condition includes a condition that the brightness is within a second range.

6. The information processing device according to claim 5, wherein
the training data generation unit generates, on a basis of a fact that the detection information does not satisfy the first condition and the condition that the brightness is within the second range is not satisfied, the second training data in accordance with the brightness.

7. The information processing device according to claim 3, wherein
the training data generation unit generates the second training data on a basis of a fact that the detection information does not satisfy the first condition and the sensor information does not satisfy a third condition.

8. The information processing device according to claim 7, wherein
the sensor information includes an amount of noise appearing in the sensor data, and
the third condition includes a condition that the amount of noise is within a third range.

9. The information processing device according to claim 8, wherein
the training data generation unit generates, on a basis of a fact that the detection information does not satisfy the first condition and the condition that the amount of noise is within the third range is not satisfied, the second training data in accordance with the amount of noise.

10. The information processing device according to claim 3, wherein
the training data generation unit generates the second training data on a basis of a fact that the detection information does not satisfy the first condition and the object information does not satisfy a fourth condition.

11. The information processing device according to claim 10, wherein
the object information includes a type of an object recognized from the sensor data, and
the fourth condition includes a condition that an object of the type appears in the first training data.

12. The information processing device according to claim 11, wherein
the training data generation unit generates the second training data in which the object of the type appears on a basis of a fact that the detection information does not satisfy the first condition and the condition that the type of the object appears in the first training data is not satisfied.

13. The information processing device according to claim 10, wherein
the object information includes a posture of an object recognized from the sensor data, and
the fourth condition includes a condition that the posture of the object includes a predetermined posture.

14. The information processing device according to claim 13, wherein
the training data generation unit generates the second training data in which an object in the posture appears on a basis of a fact that the detection information does not satisfy the first condition and a condition that the posture of the object includes the predetermined posture is not satisfied.

15. The information processing device according to claim 1, wherein
the detection information includes a detection rate related to the detection of the predetermined event, and
the first condition includes a condition that the detection rate is within a first range.

16. The information processing device according to claim 1, wherein
the retraining unit outputs the second inference model to the sensor.

17. The information processing device according to claim 16, wherein
the first inference model is stored in a memory mounted on the sensor, and
the first inference model stored in the memory mounted on the sensor is updated to the second inference model output by the retraining unit.

18. The information processing device according to claim 1, wherein
the sensor includes an image sensor configured to detect an image as the sensor data.

19. An information processing method comprising:
generating second training data on a basis of a fact that detection information related to detection of a predetermined event does not satisfy a first condition, the detection information being obtained on a basis of a first inference model generated through training based on first training data and sensor data detected by a sensor; and
obtaining a second inference model by causing a processor to perform retraining on a basis of the second training data.

20. A program causing a computer to function as an information processing device, the information processing device comprising:
a training data generation unit configured to generate second training data on a basis of a fact that detection information related to detection of a predetermined event does not satisfy a first condition, the detection information being obtained on a basis of a first inference model generated through training based on first training data and sensor data detected by a sensor; and
a retraining unit configured to perform retraining on a basis of the second training data to obtain a second inference model.
